# EUROPÄISCHE PATENTANMELDUNG

(11) **EP 1 355 126 A1**
(43) Veröffentlichungstag der Anmeldung: **22.10.2003**
(21) Anmeldenummer: 03001650.5
(22) Anmeldetag: 24.01.2003
(51) Int. Cl.: G01B 11/14, G01B 21/16

(54) **Verfahren zum Vermessen des Fügebereiches zwischen Bauteilen**

(30) Priorität: 18.04.2002 DE 10217328
(71) Anmelder: Perceptron GmbH, 81829 München (DE)
(72) Erfinder: Loferer, Hannes, Ann Arbor MI 48103 (US); Didrich, Andreas, Dipl.-Ing., 85256 Vierkirchen (DE)
(74) Vertreter: Schumacher & Willsau

(57) **Zusammenfassung**

Die Erfindung betrifft ein Verfahren zum Vermessen des Fügebereichs zwischen einem ersten Bauteil (10) und einem zweiten Bauteil (12), wobei das erste Bauteil (10) eine erste Oberfläche (14) aufweist und das zweite Bauteil (12) eine zweite Oberfläche (16) aufweist, bei dem eine erste Gerade (18) konstruiert wird, die an den Verlauf der ersten Oberfläche angepasst ist, eine zweite Gerade (20) konstruiert wird, die an den Verlauf der zweiten Oberfläche angepasst ist, eine dritte Gerade (22) konstruiert wird, die die erste Gerade (18) sowie die zweite Gerade (20) im Fügebereich schneidet, die mit der ersten Geraden (18) einen ersten Winkel (α) einschließt und mit der zweiten Geraden (20) einen zweiten Winkel (β) einschließt und die zu dem ersten Bauteil (10) einen ersten Abstand (24) hat und zu dem zweiten Bauteil (12) einen zweiten Abstand (26) hat, wobei die Winkel (α, β) in einer vorbestimmten Beziehung zueinander stehen und wobei die Abstände (24, 26) in einer vorbestimmten Beziehung zueinander stehen, und aus der Lage der dritten Geraden (22) mindestens ein Merkmal des Fügebereiches bestimmt wird.

## Beschreibung

Die Erfindung betrifft ein Verfahren zum Vermessen des Fügebereichs zwischen Bauteilen.

Beim Zusammenfügen von Bauteilen, beispielsweise bei der Fertigung von Kraftfahrzeugkarosserien, werden immer höhere Ansprüche an die Eigenschaften der Übergänge zwischen Bauteilen gestellt. Schlüsselbegriffe bei der Beurteilung der Qualität eines Fügebereichs sind Spaltbreite und Bündigkeit. Diese Begriffe spielen überall dort eine Rolle, wo benachbarte Teile in einem bestimmten Abstand und mit definierten Übergängen zu einem Gesamtsystem zusammengefügt werden. Besonders bei der bereits erwähnten Fertigung von Automobilen kommt den beiden Werten eine große Bedeutung zu; hier spielen sowohl technische Gesichtspunkte, wie Strömungsverhalten und Geräuschentwicklung, als auch die Erwartungen des Kunden an ein optisch ansprechendes Äußeres des Fahrzeugs eine ausgesprochen wichtige Rolle.

Um Übergänge von besonders hoher Qualität zu erzeugen, geht man mehr und mehr dazu über, immer geringere Spaltbreiten zwischen den Bauteilen zu wählen. Dies ist jedoch mit Problemen behaftet, da bei immer kleiner werdenden Spaltbreiten die Bündigkeit der Bauteile immer kritischer wird.

Bei Verfahren des Standes der Technik werden die Spaltbreite und die Bündigkeit der Bauteile vorwiegend durch mechanische Messgeräte erfasst. Die Spaltmaße können beispielsweise durch den Einsatz von Schieblehren bestimmt werden; die Bündigkeit wird im Allgemeinen dadurch ermittelt, dass ein Lineal an eines der zusammenzufügenden Bauteile angelegt wird und anschließend der Abstand des Lineals zu dem anderen Bauteil ermittelt wird. Ebenfalls gibt es Messgeräte, die auf Antastung beruhen und von welchen sowohl Werte als Maß für die Spaltbreite als auch für die Bündigkeit gleichzeitig abgelesen werden können. Problematisch ist dabei allerdings die geringe Genauigkeit dieser Verfahren, die um so kritischer wird, je kleiner die Spaltmaße gewählt werden und je größer somit die Anforderungen an die Bündigkeit sind. Ebenfalls ist im Stand der Technik kein Verfahren bekannt, welches in zuverlässiger Weise auch die Bündigkeit von nicht parallelen Bauteilen bestimmt. Bei derartigen Systemen wird die Messung extrem zeitaufwendig, und sie ist nicht automatisierbar.

Aus diesen Gründen wird oftmals auf die messtechnische Erfassung der Werte verzichtet, und es wird mit "Fingerspitzengefühl" gearbeitet, um ein korrektes Erscheinungsbild des Fahrzeugs zu erzeugen. Dabei wird auf das optische Empfinden beziehungsweise das Tastempfinden eines Monteurs abgestellt, was letztlich zu unterschiedlichen Qualitäten in Abhängigkeit der Fähigkeiten des Monteurs führt.

Der Erfindung liegt die **Aufgabe** zugrunde, ein Verfahren anzugeben, mit dem Spaltbreite und Bündigkeit bei beliebigen Übergängen zwischen Bauteilen zuverlässig vermessen werden können, insbesondere auch bei Bauteilen mit nicht parallelen Oberflächen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung besteht in einem Verfahren zum Vermessen des Fügebereichs zwischen einem ersten Bauteil und einem zweiten Bauteil, wobei das erste Bauteil eine erste Oberfläche aufweist und das zweite Bauteil eine zweite Oberfläche aufweist, bei dem eine erste Gerade konstruiert wird, die an den Verlauf der ersten Oberfläche angepasst ist, eine zweite Gerade konstruiert wird, die an den Verlauf der zweiten Oberfläche angepasst ist, eine dritte Gerade konstruiert wird, die die erste Gerade sowie die zweite Gerade im Fügebereich schneidet, die mit der ersten Geraden einen ersten Winkel einschließt und mit der zweiten Geraden einen zweiten Winkel einschließt und die zu dem ersten Bauteil einen ersten Abstand hat und zu dem zweiten Bauteil einen zweiten Abstand hat, wobei die Winkel in einer vorbestimmten Beziehung zueinander stehen und wobei die Abstände in einer vorbestimmten Beziehung zueinander stehen, und aus der Lage der dritten Geraden mindestens ein Merkmal des Fügebereiches bestimmt wird.

Auf diese Weise ist es möglich, die Qualität der Übergänge zwischen Bauteilen zuverlässig und objektiv zu bestimmen. Insbesondere ist das Verfahren auch dazu geeignet, bei nicht parallelen Oberflächen der Bauteile verwendet zu werden.

Das erfindungsgemäße Verfahren ist in besonders vorteilhafter Weise so geartet, dass der Fügebereich mittels Laser-Triangulation vermessen wird und die Messergebnisse als Grundlage für die Bestimmung des mindestens einen Merkmals des Fügebereichs verwendet werden. Eine solche Vermessung des Fügebereichs mittels Laser-Triangulation kann beispielsweise durch die Projektion einer Laserlinie auf die Oberflächen der Bauteile und deren Erfassung mittels einer CCD-Kamera erfolgen. Auf diese Weise erhält man Messdaten, aus denen sich die erfindungsgemäß verwendeten Geraden berechnen lassen.

Bei der Konstruktion der dritten Geraden hat es sich als besonders vorteilhaft erwiesen, dass der erste Winkel und der zweite Winkel im Wesentlichen identisch sind. Bei den meisten relativen Lagen der Bauteile ist dies ein nützliches Kriterium, um einen qualitativ hochwertigen Fügebereich zu konstruieren. Um besondere Effekte im Bereich des Übergangs zu erzeugen, kann es jedoch auch nützlich sein, die Winkel leicht oder auch stark unterschiedlich zu wählen.

Ebenfalls hat es sich als nützlich erwiesen, dass der erste Abstand und der zweite Abstand im Wesentlichen identisch sind. Auch dies ist für die meisten Fälle eine Vorgehensweise, die zu Übergängen mit hoher Qualität führt.

Es kann aber auch nützlich sein, dass der erste Abstand und der zweite Abstand zur Verbesserung des optischen Eindrucks unterschiedlich gewählt werden. In jedem Fall können die Übergänge zuverlässig und mit konstanter Qualität gefertigt werden, unabhängig davon, wie die Verhältnisse der Abstände und der Winkel gewählt werden.

Das Verfahren ist in besonders vorteilhafter Weise dadurch weitergebildet, dass ein erster Eckpunkt konstruiert wird, indem eine Tangente an das erste Bauteil im Fügebereich angelegt wird, die die erste Gerade in einem vorbestimmten Winkel in dem ersten Eckpunkt schneidet, dass ein zweiter Eckpunkt konstruiert wird, indem eine Tangente an das zweite Bauteil im Fügebereich angelegt wird, die die zweite Gerade in einem vorbestimmten Winkel in dem zweiten Eckpunkt schneidet, dass der erste Abstand zur Konstruktion der dritten Geraden die Strecke zwischen dem ersten Eckpunkt und der dritten Gerade entlang der ersten Geraden ist und dass der zweite Abstand zur Konstruktion der dritten Geraden die Strecke zwischen dem zweiten Eckpunkt und der dritten Geraden entlang der zweiten Geraden ist. Auf diese Weise sind die Abstände zwischen der dritten Gerade und den Bauteilen eindeutig und weiterhin in einer Weise definiert, die besonders geeignet ist, um bündige Übergänge bei geringen Spaltbreiten zu erzeugen.

In diesem Zusammenhang ist es nützlich, dass der vorbestimmte Winkel zur Konstruktion der Eckpunkte 45° beträgt. Es sind je nach spezieller Anwendung auch andere Winkel denkbar. Ein Winkel von 45° ist jedoch in vielen Fällen eine gute Wahl.

Weiterhin ist das Verfahren dadurch vorteilhaft ausgebildet, dass der Abstand der Eckpunkte senkrecht zur dritten Geraden ein Maß für die Breite eines Spaltes als ein Merkmal des Fügebereichs ist, wobei die Breite des Spaltes um so größer ist, je größer der Abstand der Eckpunkte ist. Damit hat man ein reproduzierbares und objektives Kriterium für die Breite des Spaltes.

Weiterhin ist es vorteilhaft, dass die Länge des Teils der dritten Gerade, der zwischen der ersten Geraden und der zweiten Geraden liegt, ein Maß für die Bündigkeit als ein Merkmal des Fügebereichs ist, wobei die Bündigkeit der Bauteile um so besser ist, je geringer die Länge des Teils der dritten Geraden ist, der zwischen der ersten Geraden und der zweiten Geraden liegt. Hierdurch ist neben der Spaltbreite auch für die Bündigkeit ein objektives Kriterium an die Hand gegeben. Die Kriterien sind bei unterschiedlichen Ausrichtungen der Oberflächen zueinander verwendbar.

Bei einer weiteren Ausführungsform der vorliegenden Erfindung ist vorgesehen, dass das aus der Lage der dritten Geraden bestimmte mindestens eine Merkmal durch einen ersten Wert beschrieben wird und dass der erste Wert zur Korrelation mit Werten aus anderen Verfahren mit einem Korrekturwert korrigiert werden kann, so dass ein zweiter Wert erzeugt werden kann. Auf diese Weise wird ermöglicht, dass die mit dem erfindungsgemäßen Verfahren ermittelten Werte mit Werten herkömmlicher Verfahren abgleichbar sind. Beispielsweise arbeiten herkömmliche Messverfahren in der Regel nicht mit einem Tangentenwinkel von 45°, im Gegensatz zu einer oben erwähnten vorteilhaften Ausführungsform des erfindungsgemäßen Verfahrens. Vielmehr wird bei Schieblehren beispielsweise mit einem Tangentenwinkel von 90° gearbeitet; mit anderen Worten, man orientiert sich an einer der Oberflächen der zusammenzufügenden Bauteile und legt die Schieblehre senkrecht an diesem Bauteil an. Die resultierenden Messwerte sind somit prinzipiell unterschiedlich. Unter der Vorraussetzung konstruktionsbedingt konstanter Bauteilradien kann ein Abgleich zwischen den Messverfahren durch Korrektur des ermittelten Wertes für die Spaltbreite und die Bündigkeit durch einen vorbestimmten, festen Korrekturwert (Offset) erfolgen.

Beispielsweise kann in diesem Zusammenhang vorgesehen sein, dass der Korrekturwert durch statistische Auswertung von Messreihen ermittelt wird, die erste Werte beziehungsweise mit dem anderen Verfahren erzeugte Werte umfassen. Zu diesem Zweck wird eine Stichprobe von Bauteilen an genau gleichen Orten mit dem erfindungsgemäßen Verfahren und dem Vergleichsverfahren, beispielsweise durch eine Schieblehre, vermessen. Die Differenz der Mittelwerte beider Messreihen bildet den Offsetwert, mit dem die Messwerte eines der beiden Messverfahren modifiziert werden.

Ebenfalls ist es möglich, dass der Korrekturwert konstruktiv aus der Bauteilgeometrie ermittelt wird. Da die Bauteilgeometrie am Ort der Messung bekannt ist, kann der Korrekturwert direkt aus den Zeichnungsvorgaben geometrisch berechnet werden. Vorteil dabei ist, dass ein Abgleich anhand einer Bauteilstichprobe entbehrlich wird. Allerdings haben Fertigungstoleranzen, die insbesondere die Bauteilradien betreffen, einen direkten Einfluss auf den Offsetwert.

Das erfindungsgemäße Verfahren ist in besonders vorteilhafter Weise dadurch weitergebildet, dass die Lage der dritten Geraden über den Abstand der Eckpunkte ausgewertet wird, dass die Lage der dritten Geraden auf andere Weise ausgewertet wird und dass aus einem Vergleich der Auswertungen der Korrekturwert ermittelt wird. Im Gegensatz zu der Ermittlung der Korrekturwerte durch andersartige Verfahren, das heißt im Allgemeinen durch Verfahren des Standes der Technik, ist es also auch möglich, den Korrekturwert mit den Mitteln des erfindungsgemäßen Verfahrens selbst zu bestimmen. Zu diesem Zweck wird die Lage der dritten Geraden einmal wie bereits beschrieben ausgewertet, so dass hierdurch erste Werte erzeugt werden können. Des weiteren wird die Lage der dritten Geraden aber auch noch auf andere Weise ausgewertet, wobei diese vorzugsweise an herkömmliche Messverfahren beziehungsweise an Erkenntnisse im Zusammenhang mit dem subjektiven Betrachtereindruck angepasst sind.

Beispielsweise kann vorgesehen sein, dass die andere Weise die Schritte umfasst: Anpassen von Kreisen an die Krümmungsradien des ersten Bauteils beziehungsweise des zweiten Bauteils; Verschieben der dritten Geraden bis die verschobene dritte Gerade Tangente an einen an ein Bauteil angepassten Kreis ist; Verschieben der dritten Geraden bis die verschobene dritte Gerade Tangente an einen an das andere Bauteil angepassten Kreis ist; und Ermitteln des senkrechten Abstands zwischen den Tangenten. Eine solche Vorgehensweise geht von der vereinfachten Überlegung aus, dass ein Betrachter in erster Linie die Scheitelkanten der beiden Bauteilradien für seine Beurteilung heranzieht. Daher wird aus den bekannten Radien beider Bauteile ein Vollkreis extrapoliert. Die Ermittlung der Spaltbreite erfolgt durch parallele Verschiebung der dritten Geraden bis zur Berührung mit dem linken beziehungsweise rechten konstruierten Radiuskreis. Die Distanz zwischen diesen Berührpunkten projiziert auf eine Gerade rechtwinklig zur dritten Geraden bildet das Maß für die Spaltbreite. Vorzugsweise werden für die Konstruktion der Vollkreise die aus den Konstruktionsvorgaben bekannten Radien verwendet; ebenfalls ist es möglich, die Radien durch ein Laser-Lichtschnittverfahren mit ausreichender Genauigkeit zu ermitteln.

Der Erfindung liegt die Erkenntnis zugrunde, dass insbesondere auf der Grundlage einer Querschnittsbestimmung durch Laser-Triangulation die Fuge zwischen benachbarten Bauteilen erfasst werden kann und auf dieser Grundlage durch mathematische Berechnungen Werte für Bündigkeit und Spaltbreite ermittelt werden können. Neben Fugen an Bauteilen mit parallelen Oberflächen können auch solche mit einem Zwischenwinkel zuverlässig vermessen und ausgewertet werden. Bei besonders bevorzugten Erweiterungen des erfindungsgemäßen Verfahrens ist es möglich, die ermittelten Werte durch Berücksichtigung von Offset-Werten mit herkömmlichen Messverfahren beziehungsweise in Anlehnung an herkömmliche Messverfahren oder unter besonders vorteilhafter Berücksichtigung des optischen Eindrucks zu modifizieren.

Die Erfindung wird nun mit Bezug auf die begleitenden Zeichnungen anhand bevorzugter Ausführungsformen beispielhaft erläutert.

Dabei zeigt:
- Figur 1: eine Schnittansicht eines Fügebereichs von zwei Bauteilen zur Erläuterung der vorliegenden Erfindung;
- Figur 2: eine in Figur 1 mit II gekennzeichnete Einzelheit;
- Figur 3: eine Schnittansicht eines Fügebereichs von zwei Bauteilen zur Erläuterung der vorliegenden Erfindung;
- Figur 4: eine Schnittansicht eines Fügebereichs von zwei Bauteilen zur Erläuterung der vorliegenden Erfindung;
- Figur 5: eine Schnittansicht eines Fügebereichs von zwei Bauteilen zur Erläuterung der vorliegenden Erfindung; und
- Figur 6: eine Schnittansicht eines Fügebereichs von zwei Bauteilen zur Erläuterung der vorliegenden Erfindung.

Bei der nachfolgenden Beschreibung bevorzugter Ausführungsbeispiele auf der Grundlage der beigefügten Zeichnungen bezeichnen gleiche Bezugszeichen gleiche oder vergleichbare Komponenten beziehungsweise Größen.

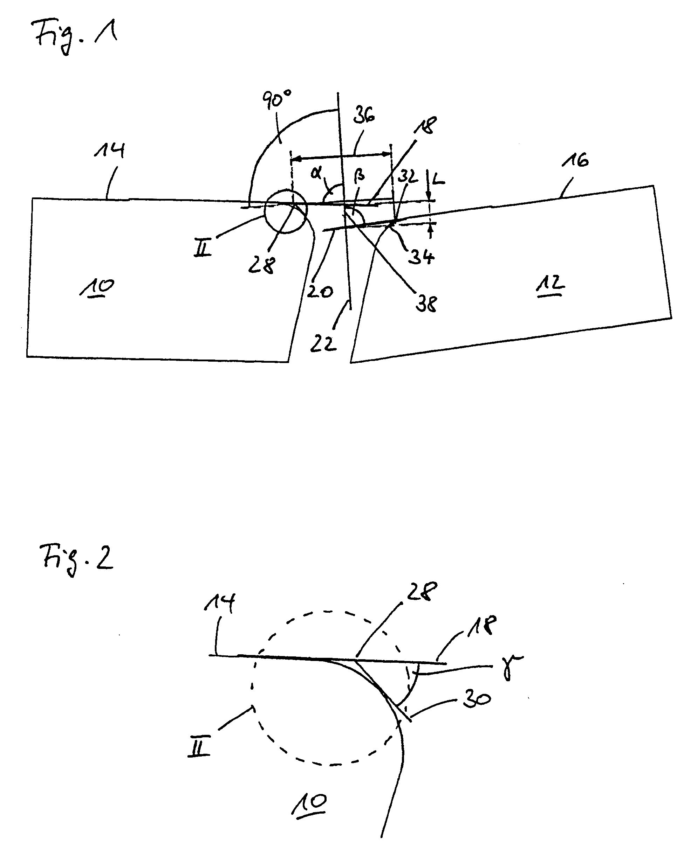

Figur 1 zeigt eine Schnittansicht eines Fügebereichs von zwei Bauteilen zur Erläuterung der vorliegenden Erfindung. Es sind ein erstes Bauteil 10 und ein zweites Bauteil 12 dargestellt. Das erste Bauteil 10 hat eine Oberfläche 14, und das zweite Bauteil 12 hat eine Oberfläche 16. An die Oberfläche 14 des ersten Bauteils 10 wird eine erste Gerade 18 angelegt, die einen Verlauf der Oberfläche 14 nachvollzieht. In vergleichbarer Weise ist an die Oberfläche 16 des zweiten Bauteils 12 eine Gerade 20 angelegt, die den Verlauf der Oberfläche 16 nachvollzieht. Sinnvollerweise wird zur Bestimmung des Verlaufs der Oberflächen 14, 16 der jeweilige Oberflächenbereich in der Nähe des Übergangs zwischen den Bauteilen 10, 12 verwendet, da dieser entscheidend für die Bestimmung von Spaltmaß und Bündigkeit ist. In diesem Zusammenhang sei erwähnt, dass die "Ufer" der Fuge noch einige Voraussetzungen erfüllen sollten. An den Eckenradius der Bauteile 10, 12 sollten sich genügend lange ebene Oberflächenbereiche anschließen, das heißt beispielsweise Bereiche mit einer Länge von 7 - 10 mm mit möglichst geringer Krümmung. Ebenfalls sollte grundsätzlich gewährleistet sein, dass der Eckenradius der beiden Bauteile nicht um mehr als einen Faktor 3 unterschiedlich ist.

Nach dem Anlegen der Geraden 18, 20 an die Oberflächen 14, 16 der Bauteile 10, 12 werden Eckpunkte 28, 32 konstruiert. Die Konstruktion der Eckpunkte 28, 32 wird am Beispiel des dem ersten Bauteil 10 zugeordneten Eckpunktes 28 mit Bezug auf Figur 2 erläutert. Es wird eine Tangente 30 an das Bauteil 10 angelegt, welche die erste Gerade 18 in einem vorbestimmten Winkel γ schneidet. Dieser Winkel γ kann beispielsweise 45° betragen. Der Schnittpunkt der Tangente 30 mit der ersten Geraden 18 wird als Eckpunkt 28 bezeichnet. In vergleichbarer Weise wird der Eckpunkt 32 bezogen auf das Bauteil 12 konstruiert.

Nachfolgend wird eine dritte Gerade 22 konstruiert, die nun wiederum in Figur 1 dargestellt ist. Die dritte Gerade 22 hat die folgenden Eigenschaften. Sie schließt mit der ersten Gerade 18 einen vorbestimmten Winkel α ein, und sie schließt mit der zweiten Gerade 20 einen vorbestimmten Winkel β ein. Bei vorteilhaften Ausführungsformen der vorliegenden Erfindung sind die Winkel α und β identisch, so dass die Gerade 22 in diesem Fall als Winkelhalbierende zu den beiden Flächengeraden 18, 20 bezeichnet werden kann. Die Gerade 22 erfüllt das weitere Kriterium, dass ihr Abstand zu dem Eckpunkt 28 des ersten Bauteils 10 sowie ihr Abstand zu dem Eckpunkt 32 des zweiten Bauteils 12 vorbestimmt ist. Vorzugsweise sind die Abstände identisch.

Anhand der nun vorliegenden geometrischen Konstruktion können die Werte für Spaltbreite und Bündigkeit abgelesen werden. Die Bündigkeit der Bauteile 10, 12 entspricht dem Teil 38 der Geraden 22, der zwischen den Schnittpunkten der Gerade 22 mit den Geraden 18 beziehungsweise 20 liegt. Der Abstand hat eine Länge L. Je geringer diese Strecke 38 ist, um so besser ist die Bündigkeit der Bauteile 10, 12. Ein Maß für die Spaltbreite ist der Abstand 36 der beiden Eckpunkte 28, 32 senkrecht zur dritten Gerade 22.

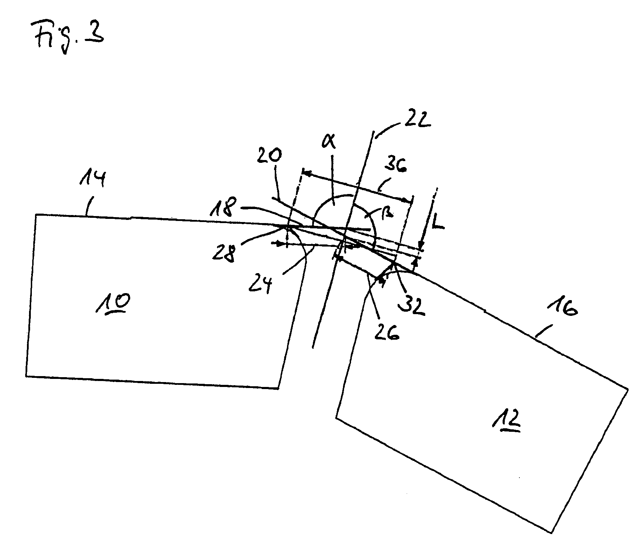

Figur 3 zeigt eine Schnittansicht eines Fügebereichs von zwei Bauteilen zur Erläuterung der vorliegenden Erfindung. Es ist ein anderes Beispiel dargestellt, welches im Vergleich zu dem Beispiel gemäß Figur 1 eine andere Ausrichtung der Oberflächen 14, 16 darstellt. Zusätzlich ist der Abstand 24 der dritten Gerade 22 zum ersten Eckpunkt 28 eingezeichnet sowie der Abstand 26 der dritten Gerade 22 zum Eckpunkt 32.

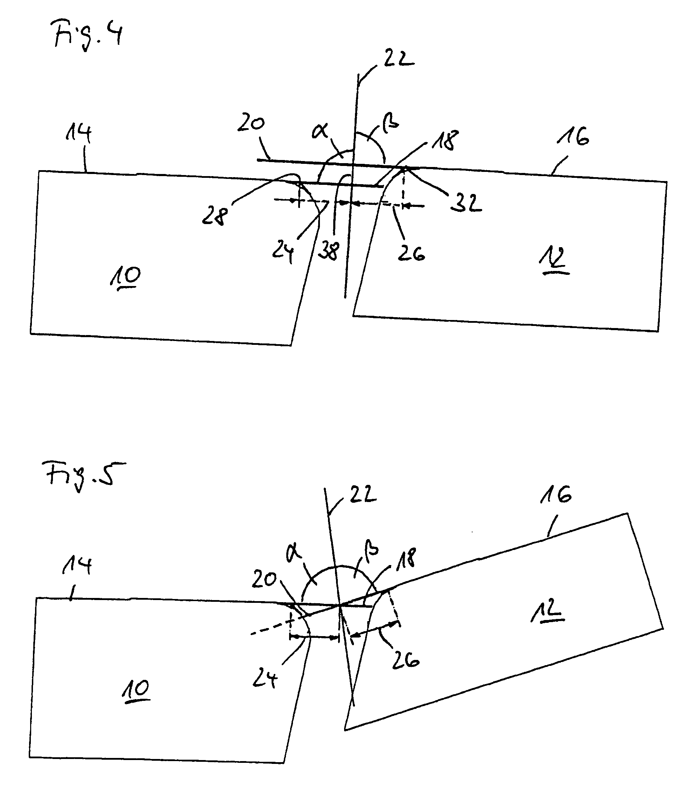

Figur 4 zeigt eine Schnittansicht eines Fügebereichs von zwei Bauteilen zur Erläuterung der vorliegenden Erfindung. Hier sind Bauteile 10, 12 mit parallelen Oberflächen 14, 16 dargestellt. Auch hier kann das erfindungsgemäße Verfahren zum Einsatz kommen, auch wenn es besondere Vorzüge mit sich bringt, wenn es darum geht, nicht parallele Oberflächen zusammenzufügen.

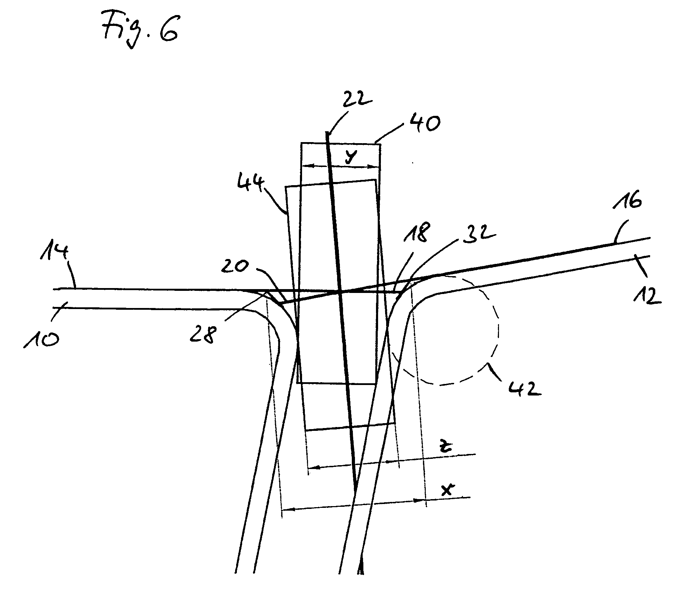

Figur 5 zeigt eine Schnittansicht eines Fügebereichs von zwei Bauteilen zur Erläuterung der vorliegenden Erfindung. Hier ist ein Beispiel dargestellt, bei dem die dritte Gerade 22 im Schnittpunkt der ersten Gerade 18 und der zweiten Gerade 20 schneidet. Mit anderen Worten, es gibt keinen Teil der dritten Gerade 22, der zwischen den Schnittpunkten der dritten Gerade 22 mit der ersten Gerade 18 beziehungsweise der zweiten Gerade 20 läge. Die Bauteile 10, 12 weisen in diesem Fall eine optimale Bündigkeit auf.

Figur 6 zeigt eine Schnittansicht eines Fügebereichs von zwei Bauteilen zur Erläuterung der vorliegenden Erfindung. Die beiden Bauteile 10, 12 bilden einen Spalt, wobei die Bündigkeit, wie auch bereits im Beispiel gemäß Figur 5, hier zur Vereinfachung der weiteren Erläuterung optimal gewählt ist, das heißt auf den Wert Null gesetzt ist. Aus der Messung der Spaltbreite auf der Grundlage des Abstandes zwischen den Eckpunkten 28, 32 ergibt sich ein erster Wert x für die Spaltbreite. Ein zweiter Wert für die Spaltbreite wird nun durch ein anderes Messverfahren ermittelt, beispielsweise durch eine Schieblehre, das heißt allgemein durch eine mechanische Bezugsvorrichtung 40. Die Messung mit der mechanischen Bezugsvorrichtung 40, das heißt beispielsweise einem Messtaster oder einer Schieblehre erfolgt in der Regel rechtwinklig zu einer der beiden Oberflächen. Im vorliegenden Fall erfolgt die Messung rechtwinklig zur Oberfläche 14 des ersten Bauteils 10. Die Messung erfolgt durch Einführen und seitliches Aufspreizen bis zur Berührung. Der linke Bezugspunkt wird durch die Tangente an den Radius des ersten Bauteils 10 gebildet. Der weitere Bezugspunkt ergibt sich aus dem ersten Berührpunkt der mechanischen Bezugsvorrichtung 40 mit der Oberfläche 16 des zweiten Bauteils 12. Dieser Berührpunkt kann von der Eindringtiefe der mechanischen Bezugsvorrichtung abhängen. Auf diese Weise ergibt sich ein Messwert y für die Spaltbreite. Durch Subtraktion der beiden Werte y und x ergibt sich für weitere Messungen ein Korrekturwert y - x, mit dem die Messwerte auf der Grundlage der Bestimmung des Abstandes der Eckpunkte 28, 32 modifiziert werden kann, um auf diese Weise vergleichbare Messwerte zu herkömmlichen mechanischen Messverfahren, beispielsweise zu Schieblehrenmesswerten, zu erhalten.

Der Korrekturwert kann statistisch oder konstruktiv bestimmt werden. Hierzu wird eine Stichprobe von Bauteilen an genau gleichen Orten mit den unterschiedlichen Messverfahren vermessen. Die Differenz der Mittelwerte beider Messreihen bildet den Offsetwert, mit dem dann die Messwerte eines der beiden Messverfahren modifiziert werden können. Ebenfalls ist es möglich, den Korrekturwert konstruktiv zu bestimmen. Da die Bauteilgeometrie am Ort der Messung bekannt ist, kann der Korrekturwert direkt aus den Zeichnungsvorgaben geometrisch berechnet werden. Vorteilhaft ist dabei das Entfallen eines Abgleichs an einer Bauteilstichprobe. Allerdings haben Fertigungstoleranzen, insbesondere im Hinblick auf den Radius, einen direkten Einfluss auf den Offsetwert.

Das mechanische Verfahren kann insbesondere dann sinnvoll eingesetzt werden, wenn mindestens eine der beiden Oberflächen einen ebenen Verlauf aufweist und die Eindringtiefe reproduziert werden kann.

Die Bündigkeit wird in der Praxis durch Auflegen eines Lineals auf das herausragende Bauteil und Messung des Spaltes zwischen Lineal und tieferliegendem Bauteil durch Fühlerblätter ermittelt. Ebenso gibt es mechanische Tastlehren. Der Abgleich erfolgt wie beim Abgleich der Spaltbreite durch Vergleich der ermittelten Werte mit den Werten, die auf der Grundlage der konstruierten dritten Geraden ermittelt wurden.

In Weiterbildungen dieser Prinzipien lässt sich ferner der subjektive Betrachtereindruck berücksichtigen. Die Überlegung zur Berücksichtigung geht vereinfachend davon aus, dass ein Betrachter in erster Linie die Scheitelkanten der beiden Bauteilradien für seine Beurteilung heranzieht. Aus diesem Grund wird aus den bekannten Radien beider Bauteile ein Vollkreis extrapoliert, wobei in Figur 6 einer dieser Vollkreise 42 dargestellt ist. Die Ermittlung der Spaltbreite erfolgt dann durch parallele Verschiebung der Geraden 22 bis zur Berührung mit dem linken beziehungsweise rechten konstruierten Radiuskreis, beispielsweise mit dem rechten Kreis 42. Die Distanz zwischen diesen Berührpunkten projiziert auf die Gerade 22 rechtwinklig zur Winkelhalbierenden bildet das Maß für die Spaltbreite. Auf diese Weise wird ein Bereich konstruiert, der in Anlehnung an die mechanische Bezugsvorrichtung 40 als virtuell berechnete Vorrichtung bezeichnet werden kann, wobei diese in Figur 6 mit Bezugszeichen 44 gekennzeichnet ist. Es ergibt sich eine Spaltbreite z und somit ein Korrekturwert, in Anlehnung an den mit der mechanischen Bezugsvorrichtung berechneten Korrekturwert y - x, von z - x.

Im Rahmen der vorliegenden Erfindung ist es vielfach entbehrlich, Korrekturen an den Messwerten für die Bündigkeit vorzunehmen. Der Grund besteht darin, dass die Projektion der Abweichung auf die Gerade 22 bereits eine gute Annäherung an den subjektiven Betrachtereindruck darstellt.

Die besondere Ausgestaltung des erfindungsgemäßen Verfahrens zur Berücksichtigung des subjektiven Betrachtereindrucks ist besonders interessant, da die erforderlichen Radien entweder aus Konstruktionsvorgaben abgeleitet oder aber durch das Laser-Lichtschnittverfahren mit ausreichender Genauigkeit ermittelt werden können.

Weiterhin wird durch die vorliegend beschriebene Ausführungsform des erfindungsgemäßen Verfahrens möglich, für einzelne Messung einen individuellen Korrekturwert zu berechnen, der auch Bauteiltoleranzen, insbesondere Bauteilradientoleranzen, berücksichtigt. In der Praxis zeigt sich jedoch häufig, dass die einmalige Bestimmung eines festen Korrekturwertes sinnvoll ist, da das optische Messverfahren durch unterschiedliche Farbgebung der Oberflächen besonders im Bereich der Krümmungsmittelpunkte beeinflusst werden kann. Insbesondere dicke Klarlackschichten auf Metallic- oder Perleffekt-Lacken können zu unerwünschten Verfälschungen führen. Aus diesem Grund ist es sinnvoll, einen einheitlichen Korrekturwert in einer Messreihe an Bauteilen mit definierter Farbe zu ermitteln.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Vermessen des Fügebereichs zwischen einem ersten Bauteil (10) und einem zweiten Bauteil (12), wobei das erste Bauteil (10) eine erste Oberfläche (14) aufweist und das zweite Bauteil (12) eine zweite Oberfläche (16) aufweist, bei dem
- eine erste Gerade (18) konstruiert wird, die an den Verlauf der ersten Oberfläche angepasst ist,
- eine zweite Gerade (20) konstruiert wird, die an den Verlauf der zweiten Oberfläche angepasst ist,
- eine dritte Gerade (22) konstruiert wird,
- die die erste Gerade (18) sowie die zweite Gerade (20) im Fügebereich schneidet,
- die mit der ersten Geraden (18) einen ersten Winkel (α) einschließt und mit der zweiten Geraden (20) einen zweiten Winkel (β) einschließt und
- die zu dem ersten Bauteil (10) einen ersten Abstand (24) hat und zu dem zweiten Bauteil (12) einen zweiten Abstand (26) hat,
- wobei die Winkel (α, β) in einer vorbestimmten Beziehung zueinander stehen und
- wobei die Abstände (24, 26) in einer vorbestimmten Beziehung zueinander stehen, und
- aus der Lage der dritten Geraden (22) mindestens ein Merkmal des Fügebereiches bestimmt wird.

2. Verfahren nach einem der vorangehenden Ansprüche, **dadurch gekennzeichnet, dass** der Fügebereich mittels Laser-Triangulation vermessen wird und die Messergebnisse als Grundlage für die Bestimmung des mindestens einen Merkmals des Fügebereichs verwendet werden.

3. Verfahren nach Anspruch 1 oder 2, **dadurch gekennzeichnet, dass** der erste Winkel (α) und der zweite Winkel (β) im Wesentlichen identisch sind.

4. Verfahren nach einem der vorangehenden Ansprüche, **dadurch gekennzeichnet, dass** der erste Abstand (24) und der zweite Abstand (26) im Wesentlichen identisch sind.

5. Verfahren nach einem der Ansprüche 1 bis 3, **dadurch gekennzeichnet, dass** der erste Abstand und der zweite Abstand zur Verbesserung des optischen Eindrucks unterschiedlich gewählt werden.

6. Verfahren nach einem der vorangehenden Ansprüche, **dadurch gekennzeichnet,**
- **dass** ein erster Eckpunkt (28) konstruiert wird, indem eine Tangente (30) an das erste Bauteil (10) im Fügebereich angelegt wird, die die erste Gerade (18) in einem vorbestimmten Winkel (γ) in dem ersten Eckpunkt (28) schneidet,
- **dass** ein zweiter Eckpunkt (32) konstruiert wird, indem eine Tangente (34) an das zweite Bauteil (12) im Fügebereich angelegt wird, die die zweite Gerade in einem vorbestimmten Winkel in dem zweiten Eckpunkt (28) schneidet,
- **dass** der erste Abstand (24) zur Konstruktion der dritten Geraden (22) die Strecke zwischen dem ersten Eckpunkt (28) und der dritten Geraden (22) entlang der ersten Geraden (18) ist und
- **dass** der zweite Abstand (26) zur Konstruktion der dritten Geraden (22) die Strecke zwischen dem zweiten Eckpunkt (32) und der dritten Geraden (22) entlang der zweiten Geraden (20) ist.

7. Verfahren nach einem der vorangehenden Ansprüche, **dadurch gekennzeichnet, dass** der vorbestimmte Winkel (γ) zur Konstruktion der Eckpunkte 45° beträgt.

8. Verfahren nach einem der vorangehenden Ansprüche, **dadurch gekennzeichnet, dass** der Abstand (36) der Eckpunkte (28, 32) senkrecht zur dritten Geraden (22) ein Maß für die Breite eines Spaltes als ein Merkmal des Fügebereichs ist, wobei die Breite des Spaltes um so größer ist, je größer der Abstand (36) der Eckpunkte (28, 32) ist.

9. Verfahren nach einem der vorangehenden Ansprüche, **dadurch gekennzeichnet, dass** die Länge (L) des Teils (38) der dritten Gerade (22), der zwischen der ersten Geraden (18) und der zweiten Geraden (20) liegt, ein Maß für Bündigkeit als ein Merkmal des Fügebereichs ist, wobei die Bündigkeit der Bauteile (10, 12) um so besser ist, je geringer die Länge (L) des Teils (38) der dritten Gerade (22) ist, der zwischen der ersten Gerade (18) und der zweiten Gerade (20) liegt.

10. Verfahren nach einem der vorangehenden Ansprüche, **dadurch gekennzeichnet,**
- **dass** das aus der Lage der dritten Geraden (22) bestimmte mindestens eine Merkmal durch einen ersten Wert beschrieben wird und
- **dass** der erste Wert zur Korrelation mit Werten aus anderen Verfahren mit einem Korrekturwert korrigiert werden kann, so dass ein zweiter Wert erzeugt werden kann.

11. Verfahren nach Anspruch 10, **dadurch gekennzeichnet, dass** der Korrekturwert durch statistische Auswertung von Messreihen ermittelt wird, die erste Werte beziehungsweise mit dem anderen Verfahren erzeugte Werte umfassen.

12. Verfahren nach Anspruch 10 oder 11, **dadurch gekennzeichnet, dass** der Korrekturwert konstruktiv aus der Bauteilgeometrie ermittelt wird.

13. Verfahren nach einem der Ansprüche 10 bis 12, **dadurch gekennzeichnet,**
- **dass** die Lage der dritten Geraden (22) gemäß Anspruch 8 ausgewertet wird,
- **dass** die Lage der dritten Geraden (22) auf andere Weise ausgewertet wird und
- **dass** aus einem Vergleich der Auswertungen der Korrekturwert ermittelt wird.

14. Verfahren nach Anspruch 13, **dadurch gekennzeichnet, dass** die andere Weise die Schritte umfasst:
- Anpassen von Kreisen an die Krümmungsradien des ersten Bauteils (10) beziehungsweise des zweiten Bauteils (12),
- Verschieben der dritten Geraden (22) bis die verschobene dritte Gerade Tangente an einen an ein Bauteil (10, 12) angepassten Kreis ist,
- Verschieben der dritten Geraden (22) bis die verschobene dritte Gerade Tangente an einen an das andere Bauteil (10, 12) angepassten Kreis ist und
- Ermitteln des senkrechten Abstands zwischen den Tangenten.
